# FASCICULE DE BREVET EUROPEEN

(11) **EP 2 013 036 B1**
(45) Date de publication et mention de la délivrance du brevet: **10.03.2010**
(21) Numéro de dépôt: 07728521.1
(22) Date de dépôt: 25.04.2007
(51) Int. Cl.: B60C 11/04, B60C 11/13

(54) **PNEUMATIQUE POUR VEHICULE DE MANUTENTION**
REIFEN FÜR HANDHABUNGSFAHRZEUG
TYRE FOR CARRIER VEHICLE

(30) Priorité: 26.04.2006 FR 0603768
(43) Date de publication de la demande: 14.01.2009
(73) Titulaire: Société de Technologie Michelin, 63000 Clermont-Ferrand (FR); Michelin Recherche et Technique S.A., 1763 Granges-Paccot (CH)
(72) Inventeur: HARLE, François, 63000 Clermont-Ferrand (FR)
(74) Mandataire: Le Cam, Stéphane Georges Elie
(86) Numéro de dépôt international: PCT/EP2007/054066
(87) Numéro de publication internationale: WO 2007/122252

(56) Documents cités:
- EP-A2- 0 227 322
- EP-A2- 0 282 252
- JP-A- 2004 009 771

## Description

L'invention est relative à un pneumatique pour véhicule de manutention et plus spécifiquement pour un véhicule de type « straddle » circulant sur les ports et destinés à la manutention de container.

Bien que non limitée aux véhicules de type straddle, l'invention sera plus particulièrement décrite en référence à des pneumatiques équipant ces véhicules dont les conditions d'utilisation sont particulières. Ce type de véhicule est équipé de huit roues indépendantes dont les montages et réglages sont indépendants, ce qui conduit le plus souvent à des mises en dérive des pneumatiques lors de l'utilisation du véhicule.

L'utilisation de ce type de véhicule est liée au déplacement des containers de marchandise sur les ports. Cette utilisation correspond donc à des déplacements de lourdes charges à vitesses réduites habituellement de l'ordre de 20 km/h.

Le poids des charges transportées par ce type de véhicule a conduit les concepteurs de pneumatiques à développer des produits spécifiques comportant notamment une bande de roulement relativement épaisse. Cette caractéristique permet notamment d'éviter des usures trop rapides du fait des charges transportées. Egalement du fait du poids des charges transportées, les rainures transversales sur la surface de la bande de roulement destinée à venir au contact du sol ont été abandonnées au profit de rainures circonférentielles, notamment pour éviter des usures en « dents de scie ». Des pneumatiques destinés à ce type de véhicule comporte habituellement deux rainures circonférentielles divisant la bande de roulement du pneumatique en trois zones circonférentielles ou « ribs ».

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les demandes actuelles des utilisateurs visant des charges transportées toujours plus importantes et à des vitesses plus élevées, il apparaît que les pneumatiques peuvent subir des dégradations dans certaines conditions d'utilisation. Il peut notamment apparaître des décollements de bande de roulement lorsque les charges transportées deviennent excessives et sont véhiculées à des vitesses importantes.

De tels phénomènes s'expliquent notamment par l'épaisseur importante de la bande de roulement qui conduit à un échauffement important des masses caoutchouteuses, dû notamment aux phénomènes de mise à plat du pneumatique dans l'aire de contact avec le sol et aux frottements sur le sol. De tels échauffements conduisent à des risques de décohésion, ce phénomène étant notamment fonction de la charge transportée et des vitesses d'utilisation des pneumatiques.

Les inventeurs se sont ainsi donnés pour mission de répondre à la demande actuelle des utilisateurs et de fournir des pneumatiques pour véhicule de manutention de type Straddle capables de supporter des charges et vitesses plus importantes sans sacrifier leur performance en terme d'usure.

Ce but a été atteint selon l'invention par un pneumatique pour véhicule de manutention à armature de carcasse radiale comportant une bande de roulement dont l'épaisseur selon la direction radiale dans le plan médian circonférentiel est supérieure à 40 mm, ledit pneumatique comportant au moins trois rainures circonférentielles et au moins la rainure circonférentielle centrale présentant une largeur axiale L inférieure à 15 mm et une profondeur radiale H telles que le rapport de la largeur axiale L sur la profondeur radiale H est compris entre 0.1 et 0.3.

Un pneumatique ainsi défini selon l'invention a montré en usage sur un véhicule de type straddle qu'il permet de parcourir une distance plus importante qu'un pneumatique usuel sans apparition d'endommagement. La présence de la rainure circonférentielle centrale, avantageusement dans le plan médian circonférentiel, semble conféré un refroidissement complémentaire de la bande de roulement qui permet de prévenir les dommages rencontrés avec des pneumatiques usuels. Les inventeurs ont su mettre en évidence que ladite rainure centrale outre sa capacité à assurer un refroidissement complémentaire du fait de sa présence présente des dimensions qui permettent d'accroître ce refroidissement. En effet, les dimensions de ladite rainure centrale autorisent un rapprochement de ses deux parois circonférentielles et en conséquence une fermeture de ladite rainure dans la zone de l'aire de contact. En d'autres termes, la partie de la rainure centrale se trouvant dans l'aire de contact du pneumatique avec le sol, disparaît du fait du rapprochement de ses deux parois. Cet effet de fermeture de la rainure conduit dans la zone d'entrée de l'aire de contact à un phénomène d'aspiration de l'air et en sortie d'aire de contact à un phénomène d'expulsion de l'air, qui favorisent la circulation de l'air et donc le refroidissement de la bande de roulement.

Selon un mode de réalisation préféré de l'invention, la largeur axiale L de la rainure est supérieure à 5 mm. Pour des largeurs inférieures de la rainure, la capacité supplémentaire de refroidissement peut être insuffisante pour certains types d'utilisation.

Selon une réalisation préférée également de l'invention, la profondeur radiale H du pneumatique est supérieure à 40 mm et de préférence supérieure à 50 mm. De telles profondeurs favorisent encore le refroidissement de la bande de roulement.

Selon une variante avantageuse de l'invention, les trois rainures circonférentielles présentent les mêmes propriétés de largeur axiale et de profondeur radiale. Selon cette variante de l'invention, les trois rainures présentent donc des dimensions telles que celles décrites précédemment pour la rainure centrale. Les inventeurs ont su mettre en évidence que les fermetures des rainures latérales qui interviennent alors dans la zone de l'aire de contact comme expliqué précédemment pour la rainure centrale, outre le phénomène de circulation d'air qu'elles engendrent, conduisent à lutter contre l'usure de la bande de roulement au niveau des épaules du pneumatique ; en effet, la fermeture d'une rainure latérale conduit à une augmentation de la rigidité transversale qui contribue à limiter l'usure du pneumatique notamment liée au glissement dans cette zone. Comme il l'a été dit précédemment les pneumatiques de ce type de véhicule sont fortement sollicités en dérive du fait notamment de la conception des véhicules et notamment des difficultés de réglage sur le véhicule, ce qui conduit à une usure des parties latérales de la bande de roulement de ces pneumatiques. L'amélioration de la rigidité transversale dans la zone de l'aire de contact permet d'atténuer ces inconvénients.

Par ailleurs, les inventeurs ont su mettre en évidence, contrairement à une opinion établie, que la diminution de la largeur des rainures par rapport aux pneumatiques usuels pour ce type d'usage ne présente pas d'inconvénient notamment dans le cas de roulage sur sol mouillé car les vitesses de circulation des véhicules sont relativement faibles et les dimensions des rainures selon l'invention restent suffisantes pour assurer l'évacuation de l'eau.

Selon un mode de réalisation préférée de l'invention, les deux rainures axialement extérieures forment des lignes brisées. Selon ce mode de réalisation, les rainures latérales permettent de donner une allure bi-directionnelle à la sculpture et apporte un minimum d'arêtes transversales conférant une capacité de freinage et/ou de passage de couple supérieure sur sol humide.

Selon ce mode de réalisation préféré de l'invention, la distance axiale maximale entre deux points appartenant respectivement à chaque paroi d'une rainure est avantageusement inférieure à 10 mm, notamment pour conserver des propriétés d'amélioration de la rigidité transversale satisfaisante pour tout type d'usage.

Avantageusement encore selon l'invention, les rainures forment quatre zones circonférentielles ou « ribs » de largeurs sensiblement équivalentes. Le pneumatique ainsi conçu présente alors une sculpture symétrique qui favorise un refroidissement homogène de la bande de roulement et une augmentation de la rigidité transversale équivalente de part et d'autre du pneumatique.

Selon un mode de réalisation avantageux de l'invention, les zones circonférentielles ou ribs formées par les rainures comportent des incisions transversales s'initiant sur la paroi formant une rainure. Selon ce mode de réalisation de l'invention, les incisions contribuent au rôle joué par les rainures en assurant une diffusion des phénomènes de fluage de la masse caoutchouteuse pouvant apparaître au sommet des rainures circonférentielles. La présence de telles incisions peut ainsi permettre d'éviter l'apparition d'usure des bords de rainures due à ces phénomènes de fluage.

La bande de roulement peut encore comporter, notamment sur les zones circonférentielles ou ribs axialement extérieurs, des évidements répartis sur la circonférence desdits ribs pour contribuer au refroidissement de ces parties de la bande de roulement. De tels évidements sont par exemple décrits dans le document US D492,246 S.

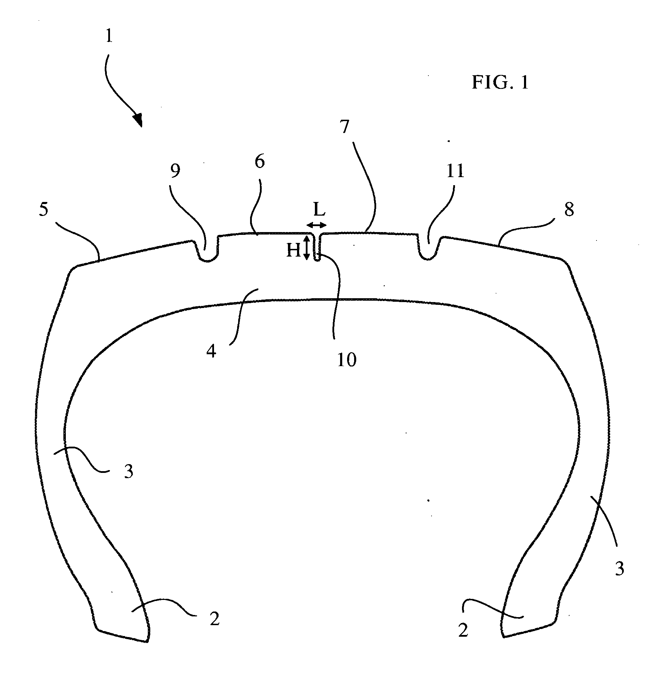

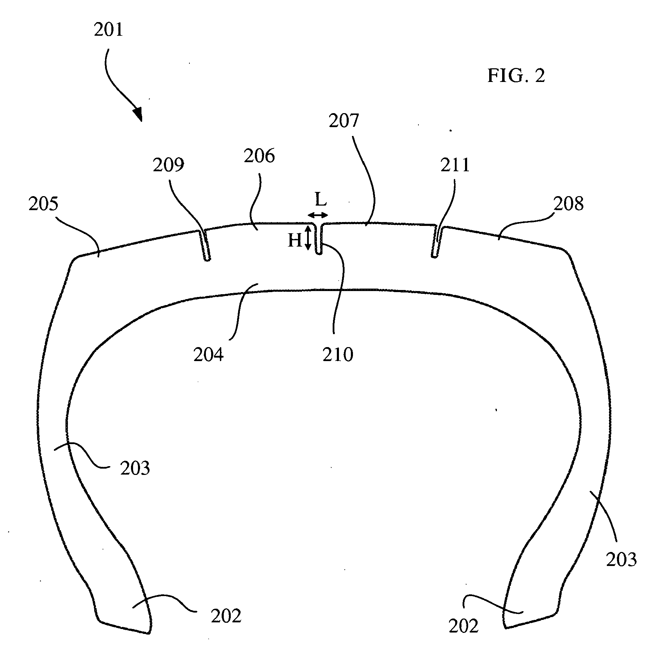

D'autres détails et caractéristiques avantageux de l'invention ressortiront ci-après de la description d'exemples de réalisation de l'invention en référence aux figures 1 et 2 qui représentent:
- figure 1, une représentation schématique d'un pneumatique selon un premier mode de réalisation de l'invention,
- figure 2, une représentation schématique d'un pneumatique selon un deuxième mode de réalisation de l'invention.

Les figures ne sont pas représentées à l'échelle pour en simplifier la compréhension.

La Figure 1 représente un schéma vu selon une coupe radiale d'un pneumatique 1 réalisé conformément à l'invention. Le pneumatique 1 comporte deux bourrelets 2 destinés à être montés sur des sièges de jante. Chaque bourrelet 2 est prolongé radialement vers l'extérieur par un flanc 3, ledit flanc 3 rejoignant radialement vers l'extérieur la bande de roulement 4 dudit pneumatique 1. La bande de roulement 4 du pneumatique 1 est divisée sur sa surface extérieure en quatre bandes circonférentielles ou ribs 5, 6, 7, 8 séparés par trois rainures 9, 10, 11.

Les deux rainures axialement extérieures 9, 11 sont de dimensions usuelles pour ce type de pneumatique et présentent une largeur axiale d'environ 35 mm. La rainure centrale 10 qui est réalisée dans le plan médian circonférentiel présente conformément à l'invention une largeur axiale L égale à 10 mm. Sa profondeur H est de 50 mm et le rapport L/H est ainsi égal à 0.2.

Un pneumatique réalisé conformément à la figure 1 a été testé sur un véhicule de type straddle, celui-ci circulant dans des conditions usuelles, c'est-à-dire qu'il transporte de lourdes charges correspondant aux poids de containers à des vitesses inférieures à 30 Km/h. Ces essais du pneumatique selon l'invention ont été faits en comparaison avec des roulages identiques en équipant un même véhicule de type Straddle de pneumatiques usuels, c'est-à-dire ne présentant que les deux rainures axialement extérieures 9 et 11. Les essais ainsi réalisés ont montré que le pneumatique réalisé conformément à l'invention autorise des roulages sur des plus grandes distances sans laisser apparaître de dommage alors que le pneumatique usuel laisse apparaître une détérioration de la bande de roulement.

Les inventeurs ont su mettre en évidence que cette détérioration du pneumatique est due à un échauffement de la bande de roulement et plus particulièrement de la partie centrale du pneumatique. Les essais ainsi réalisés montrent qu'une réalisation selon l'invention améliore donc les propriétés d'endurance du pneumatique. Ils semblent ainsi confirmer que la rainure 10 prévue dans le plan médian circonférentiel assure un refroidissement complémentaire de la bande de roulement qui permet donc pour les conditions d'utilisation d'un véhicule de type straddle d'augmenter la durée de vie du pneumatique. La dimension de la rainure 10 telle que satisfaisant les caractéristiques de l'invention permet, outre l'augmentation de la surface d'échange qu'elle procure, de créer un phénomène d'aspiration/expulsion de l'air, tel que décrit précédemment, lors du passage dans l'aire de contact qui contribue à une meilleure circulation de l'air et donc un refroidissement renforcé.

La différence entre le kilométrage parcouru par un pneumatique selon l'invention et le kilométrage parcouru par un pneumatique usuel peut être très différente. En effet, les conditions d'utilisation de ce type de véhicule conduisent fréquemment à une dégradation du pneumatique avant son usure normale du fait de l'élévation de température de la bande de roulement. La solution pneumatique ainsi proposée par l'invention peut permettre d'éviter une telle élévation de température et donc de conserver un pneumatique jusqu'à son usure complète sans voir intervenir une dégradation auparavant.

La figure 2 représente un schéma vu selon une coupe radiale d'un pneumatique 201 réalisé conformément à l'invention. Le pneumatique 201 se différencie du pneumatique 1 de la figure 1 par la présence de trois rainures 209, 210, 211 de dimensions identiques.

La présence des rainures axialement extérieures 209, 211 de dimensions inférieures à celles habituellement réalisées pour ce type de pneumatique va également contribuer à un meilleur refroidissement de la bande de roulement, notamment du fait du phénomène d'aspiration, expulsion de l'air précédemment décrit.

En outre, ces rainures 209, 211 et plus exactement leurs dimensions, permettent du fait du rapprochement de leurs parois lors du passage dans l'aire de contact d'augmenter la rigidité notamment latérale de la bande de roulement.

Les essais réalisés ont mis en évidence que cette augmentation de la rigidité latérale lors du passage dans l'aire de contact avec le sol permet de limiter l'usure au niveau des parties axialement extérieures de la bande de roulement.

Les comparaisons dans des usages identiques avec des pneumatiques usuels ou bien avec des pneumatiques conformes à la représentation de la figure 1 ont effectivement mis en évidence que l'usure sur les parties axialement extérieures de la bande de roulement sont moins importantes pour les pneumatiques réalisés conformément à cette représentation de la figure 2.

Cette diminution de l'usure sur les parties axialement extérieures de la bande de roulement contribue également à limiter les augmentations de température de la partie centrale de la bande de roulement en permettant au pneumatique de conserver une répartition de la charge et de la pression sur toute sa largeur axiale dans la zone de l'aire de contact.

Les essais ont encore mis en évidence un autre avantage des rainures axialement étroites selon l'invention ; La comparaison avec les pneumatiques usuelles montrent un risque diminué à l'égard des agressions de fond de sculpture pouvant conduire à des crevaisons. De telles crevaisons sont par exemple dues à des débris métalliques susceptibles d'entailler les pneumatiques, lesdits débris provenant le plus souvent des containers qui sont déplacés et stockés sur les ports. En effet, la faible largeur desdites rainures et le fait que celles-ci se ferment dans la zone de l'aire de contact permet d'éviter ou tout au moins de limiter de telles agressions.

## Revendications

1. Pneumatique (1) pour véhicule de manutention à armature de carcasse radiale comportant une bande de roulement (4) dont l'épaisseur selon la direction radiale dans le plan médian circonférentiel est supérieure à 40 mm, **caractérisé en ce qu'**il comporte au moins trois rainures circonférentielles 9, 10, 11, 209, 210, 211 et **en ce qu'**au moins la rainure circonférentielle centrale (10, 210) présente une largeur axiale L inférieure à 15 mm et une profondeur radiale H telles que le rapport de la largeur axiale L sur la profondeur radiale H est compris entre 0.1 et 0.3.

2. Pneumatique selon la revendication 1, **caractérisé en ce que** la largeur axiale L est supérieure à 5 mm.

3. Pneumatique selon la revendication 1 ou 2, **caractérisé en ce que** la profondeur radiale H est supérieure à 40 mm et de préférence supérieure à 50 mm.

4. Pneumatique selon l'une des revendications 1 à 3, **caractérisé en ce que** les trois rainures circonférentielles présentent les mêmes propriétés de largeur axiale et de profondeur radiale.

5. Pneumatique selon l'une des revendications précédentes, **caractérisé en ce que** les deux rainures axialement extérieures forment des lignes brisées.

6. Pneumatique selon la revendication 5, **caractérisé en ce que** la distance axiale maximale entre deux points appartenant respectivement à chaque paroi d'une rainure est inférieure à 10 mm.

7. Pneumatique selon l'une des revendications précédentes, **caractérisé en ce que** les rainures forment quatre zones circonférentielles ou « ribs » 5, 6, 7, 8, 205, 206, 207, 208 de largeurs sensiblement équivalentes.

8. Pneumatique selon l'une des revendications précédentes, **caractérisé en ce que** les zones circonférentielles ou ribs formées par les rainures comportent des incisions transversales s'initiant sur la paroi formant une rainure.

9. Pneumatique selon l'une des revendications précédentes, **caractérisé en ce que** les zones circonférentielles ou ribs axialement extérieurs comportent des évidements.

10. Utilisation d'un pneumatique selon l'une des revendications précédentes sur un véhicule de manutention portuaire de type Straddle.

## Claims

1. Radial tire (1) for a handling vehicle, comprising a tread (4) in which the thickness in the radial direction in the circumferential mid-plane is greater than 40 mm, **characterized in that** it comprises at least three circumferential grooves (9, 10, 11, 209, 210, 211) and **in that** at least the central circumferential groove (10, 210)has an axial width L of less than 15 mm and a radial depth H which are such that the ratio of axial width L to radial depth H is between 0.1 and 0.3.

2. Tire according to Claim 1, **characterized in that** the axial width L is greater than 5 mm.

3. Tire according to Claim 1 or 2, **characterized in that** the radial depth H is greater than 40 mm and preferably greater than 50 mm.

4. Tire according to one of Claims 1 to 3, **characterized in that** the three circumferential grooves have the same axial width and radial depth properties.

5. Tire according to one of the preceding claims, **characterized in that** the two axially outermost grooves form broken lines.

6. Tire according to Claim 5, **characterized in that** the maximum axial distance between two points belonging to each wall of a groove respectively is less than 10 mm.

7. Tire according to one of the preceding claims, **characterized in that** the grooves form four circumferential regions or "ribs" (5, 6, 7, 8, 205, 206, 207, 208) of substantially equivalent widths.

8. Tire according to one of the preceding claims, **characterized in that** the circumferential regions or ribs formed by the grooves have transverse incisions starting from the wall that forms a groove.

9. Tire according to one of the preceding claims, **characterized in that** the axially outermost circumferential regions or ribs have cavities.

10. Use of a tire according to one of the preceding claims on a port-side handling vehicle of the straddle carrier type.

## Patentansprüche

1. Luftreifen (1) für ein Flurförderzeug mit radialer Karkassenbewehrung, der einen Laufstreifen (4) aufweist, dessen Dicke gemäß der radialen Richtung in der Umfangsmittelebene größer als 40 mm ist, **dadurch gekennzeichnet, dass** er mindestens drei Umfangsrillen (9, 10, 11, 209, 210, 211) aufweist, und dass mindestens die mittlere Umfangsrille (10, 210) eine axiale Breite L von weniger als 15 mm und eine radiale Tiefe H derart aufweist, dass das Verhältnis der axialen Breite L zur radialen Tiefe H zwischen 0,1 und 0,3 liegt.

2. Luftreifen nach Anspruch 1, **dadurch gekennzeichnet, dass** die axiale Breite L größer als 5 mm ist.

3. Luftreifen nach Anspruch 1 oder 2, **dadurch gekennzeichnet, dass** die radiale Tiefe H größer als 40 mm und vorzugsweise größer als 50 mm ist.

4. Luftreifen nach einem der Ansprüche 1 bis 3, **dadurch gekennzeichnet, dass** die drei Umfangsrillen die gleichen Eigenschaften axialer Breite und radialer Tiefe haben.

5. Luftreifen nach einem der vorhergehenden Ansprüche, **dadurch gekennzeichnet, dass** die zwei axial äußeren Rillen gebrochene Linien bilden.

6. Luftreifen nach Anspruch 5, **dadurch gekennzeichnet, dass** der maximale axiale Abstand zwischen zwei Punkten, die je zu jeder Wand einer Rille gehören, geringer als 10 mm ist.

7. Luftreifen nach einem der vorhergehenden Ansprüche, **dadurch gekennzeichnet, dass** die Rillen vier Umfangszonen oder "Ribs" (5, 6, 7, 8, 205, 206, 207, 208) von im Wesentlichen äquivalenten Breiten bilden.

8. Luftreifen nach einem der vorhergehenden Ansprüche, **dadurch gekennzeichnet, dass** die von den Rillen geformten Umfangszonen oder Ribs Quereinschnitte aufweisen, die auf der eine Rille bildenden Wand beginnen.

9. Luftreifen nach einem der vorhergehenden Ansprüche, **dadurch gekennzeichnet, dass** die axial äußeren Umfangszonen oder Ribs Aussparungen aufweisen.

10. Verwendung eines Luftreifens nach einem der vorhergehenden Ansprüche auf einem Hafen-Flurförderzeug vom Typ Straddle.
